Europäisches Patentamt

European Patent Office

Office européen des brevets

(11) Numéro de publication: **0 450 250 A1**

# (12) DEMANDE DE BREVET EUROPEEN

(21) Numéro de dépôt: **90500036.0**

(22) Date de dépôt: **06.04.90**

(51) Int. Cl.5: **F16K 47/02**, F16K 21/18, F16K 31/26

Le titre de l'invention a été modifié (Directives relatives à l'examen pratiqué à l'OEB, A-III, 7.3)

(43) Date de publication de la demande:
**09.10.91 Bulletin 91/41**

(84) Etats contractants désignés:
**AT BE CH DE DK ES FR GB GR IT LI LU NL SE**

(71) Demandeur: **Gimeno Castel, Antonia**
**Grupo de la Paz, 45, 4o, 3a**
**E-08020 Barcelona(ES)**

(72) Inventeur: **Leon Fernandez, Pablo**
**Grupo de la Paz, no. 45,4,3**
**E-08020 Barcelona(ES)**

(54) **Soupape à haute pression d'ouverture et fermeture par temps automatiques.**

㊅ Perfectionnements dans une soupape à haute pression d'ouverture et fermeture par temps automatiques sans flotteur pour la mise en eau de réservoirs, un corps (I) avec couvercle (2), son ensemble de cylindres (3) placés les uns dans les autres jouant le rôle de soupapes d'ouverture et de fermeture du débit se logeant dans la partie cylindrique supérieure du corps (4) le couvercle (2) fixe la platine (5) et loge le cylindre pousseur (6) un récipient (7) fixé sur platine (5) son fond extérieur au moyen de la prolongation de ses parois (8) accumule une masse d'air (9) quand il est submergé, un conduit flexible (I0) conduit l'eau du couvercle (2) au récipient (7) l'extrayant du débit à son passage vers le tuyau (II) le récipient plein d'eau élève les cylindres, les ouvrant un par un quand le niveau du réservoir élève le récipient les cylindres descendent de la même façon jusqu'à fermer le débit.

Fig. 1

EP 0 450 250 A1

Rank Xerox (UK) Business Services

Le brevet d'invention présent se réfère à des perfectionnements dans une soupape à haute pression d'ouverture et fermeture par temps automatiques sans flotteur pour le remplissage de réservoirs, laquelle est pratiquement applicable à toutes sortes de citernes de waters, réservoirs et citernes dans le but de fournir la mise en eau ou de liquides dans ceux-ci.

Actuellement, la majeure partie des appareils destinés à cette fin, sont basés sur le fait qu'ils disposent d'un flotteur à l'extrémité d'une tige, et, l'autre un obturateur qui ferme l'orifice de sortie d'eau dans le corps par sa partie extérieure de l'orifice, disposant pour cela de la force que lui imprime le flotteur au moyen du niveau d'eau atteint dans la citerne, le diamètre de l'orifice étant limité au volume du flotteur et conformément à la pression existant dans le réseau.

Pour ces appareils connus, quand on en a besoin pour les placer dans une tuyauterie de plus grandes sections, afin d'obtenir une partie de son débit dans l'orifice de sortie d'eau, il est nécessaire de placer des flotteurs de grand volume avec un rayon de commande très long pour obtenir la force adéquate afin de boucher l'orifice et, quand la pression est très haute, on a besoin d'installer un réducteur de pression à son entrée qui adapte la force au flotteur en question.

Les prefectionnements présents sont basés essentiellement sur le fait que la fermeture du débit qui passe par le corps allimenté par la connexion au réseau, se produit à l'intérieur du corps et en faveur de la pression dans le sens où il circule, pourvu d'un ensemble de soupapes formé par une ou plusieurs pour la fermeture du débit, lesquelles sont posées sur des bases en caoutchouc existant sur les bases inférieures et intérieures des cylindres, la configuration des parties extérieures et inférieures de chacun des cylindres constitue une tête de soupape en vertu de leurs plans inclinés, lesdites têtes de soupapes reposent sur les caoutchoucs qui sont logés à l'intérieur de chaque cylindre, l'ensemble de soupapes étant formé par le placement du cylindre de diamètre plus petit à l'intérieur de l'immédiat de plus grand diamètre et ainsi successivement, jusqu'à compléter le nombre désiré de soupapes dans l'ensemble, lesdits cylindres à travers des orifices pratiqués à la partie inférieure de ses parois, permettent le passage de l'eau à l'intérieur du cylindre suivant et celui-ci aux autres cylindres, laquelle ne peut s'échapper vers l'extérieur du corps à cause de l'action du cylindre suivant, qui logé à l'intérieur du premier, repose au moyen de son propre poids sur la base en caoutchouc qui se trouve à la partie inférieure et intérieure du premier cylindre.

Avec le placement de plusieurs cylindres, l'un logé à l'intérieur du suivant, on permet de diviser la section du débit dans le nombre de cylindres qu'on a placés afin que l'ouverture et la fermeture se produisent avec des temps égaux au nombre de cylindres, pour l'ouverture étant requise uniquement la force correspondant à la section d'un temps ou cylindre et la fermeture de la même façon pour éviter la violence qui dans les hautes pressions se produit par bélier.

Pour l'obtention de l'ouverture et la fermeture automatique on dispose d'un petit récipient de peu de poids (comme plastique) lequel est placé à l'extrémité extérieure de la platine, et, par son autre extrémité, la platine au moyen de la cheville est unie au corps, le récipient se remplit d'eau au moyen d'un conduit sonde qui s'alimente du propre corps de la soupape depuis sa partie intérieure quand le débit est ouvert, le poids dudit récipient obtenu quand il se remplit d'eau imprime la force nécessaire par l'action de la gravité à l'autre bout de la platine, lequel pousse la tige du premier cylindre intérieur s'élevant jusqu'à faire arrêt avec le suivant, qui à son tour, lévera les autres en même temps que se produit l'ouverture du débit dans chaque cylindre qui s'ouvre.

La fermeture du débit se produit quand le niveau d'eau dans le réservoir atteint le récipient en plastique qui se trouve plein d'eau et logé à l'extrémité extérieure de la platine, à ce moment-là le poids du récipient flottant à demi invalide son action, le premier cylindre extérieur commençant à ce moment à descendre jusqu'à se placer sur sa base de caoutchouc et successivement le reste des cylindres jusqu'à la fermeture totale du débit, lequel par l'action de la propre pression poussant les cylindres sur leurs bases produit une étanchéité totale.

Afin de faciliter l'explication, on joint au mémoire descriptif présent une feuille de dessins sur laquelle a été présenté un cas pratique de réalisation, lequel est cité seulement à titre d'exemple du brevet d'invention présent.

Sur les dessins:

La figure I représente une vue en élévation sectionnée du corps, et, une vue inclinée sectionnée du couvercle du corps de l'appareil hydraulique suivant les perfectionnements présents.

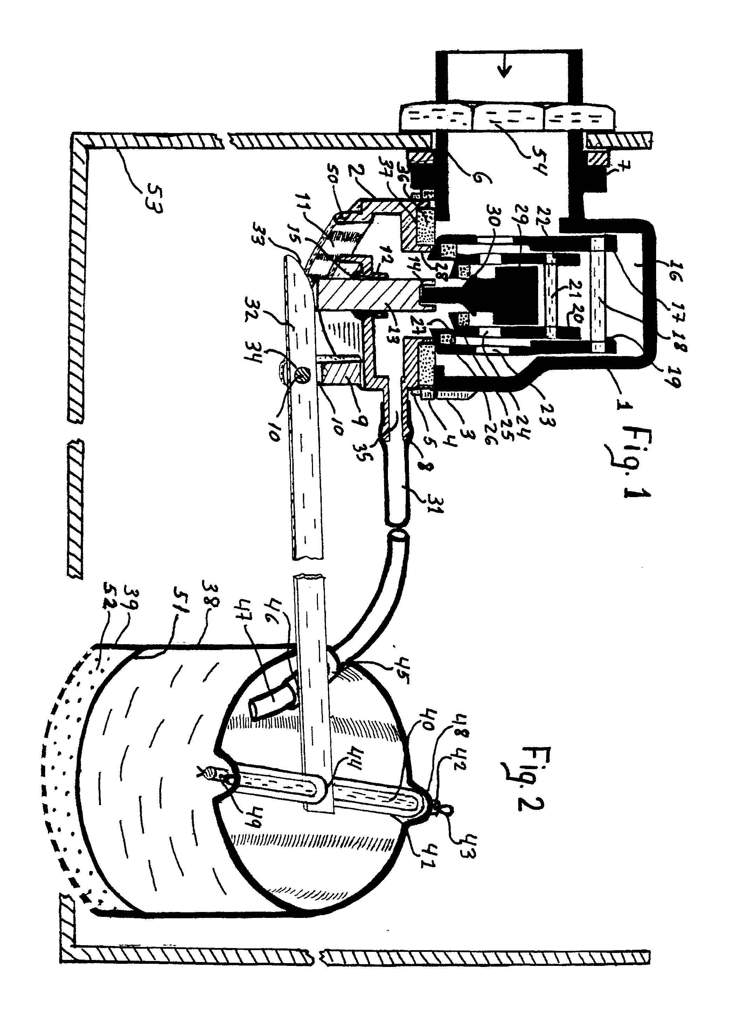

La figure 2 est une vue supérieure et latérale du récipient et sa fixation à la platine avec la sonde pour remplir le récipient.

Selon le dessin (fig.I), l'appareil hydraulique objet des perfectionnements présents comprend principalement un corps supérieur -I- un couvercle de corps -2- une platine pour ouverture -32- un orifice pour connexion de sonde -8-.

Contre le coprs -I- est configurée la base inférieure -2- cell-ci est appliquée au corps -I- au moyen de quatre saillants -3- que possède le corps -I- avec des orifices filetés en sens vertical du

corps -l- le couvercle -2- s'unit au moyen de quatre languettes -4- qui avec les orifices de passage dans les languettes permet d'introduire une vis à tête hexagonale avec filet -5- pour chaque languette avec interposition d'un caoutchouc plat -36- l'entrée d'eau étant configurée par le conduit -6- dans le corps -l- et sortie de celle-ci par le conduit -ll- et -35-.

Sur le couvercle -2- se trouve la fourche -9- pour la fixation de la platine -32- se fixant au moyen de la cheville -10- par l'orifice -34-.

A l'intérieur du corps -l- on trouve, le cylindre -17- avec quatre orifices de passage sur ses parois -23- à sa partie supérieure sont pratiqués deux orifices -l9- qui traversent par son diamètre le cylindre -l7- dans lesdits orifices se loge une cheville -l8- qui traverse ses parois jusqu'à l'extérieur du cylindre -17- à sa partie inférieure existe une cannelure -27- qui loge un caoutchouc plat -26- à la partie extérieure inférieure du cylindre -17- s'appuie d'abord sur le caoutchouc -36- et quand la pression hydraulique fait pression sur le caoutchouc, il repose sur la limite -28- du couvercle -2-.

A l'intérieur du cylindre -l7- est logé le cylindre -20- dans ses parois sont pratiqués quatre orifices de passage -24- et à sa partie supérieure il est traversé par la cheville -2l- qui se loge dans les orifices -22- à sa partie inférieure est logé un caoutchouc plat -25-, ledit cylindre -20- repose sur le caoutchouc -25- et à la limite -27- du cylindre -l7-.

A l'intérieur du cylindre -20- est logé le cylindre -29- en son milieu solidairement se trouve la tête de soupape -30- se prolongeant vers sa partie inférieure sous forme de tige jusqu'à se loger dans le fraisage -l4- du cylindre pousseur -l3-.

Dans le couvercle -2- de son côté frontal se trouve le conduit -8-avec un orifice pratiqué dans son intérieur -35- dans le couvercle intérieur se trouve l'orifice guide -l2- avec un bord saillant par sa partie extérieure -l5- dans la partie inférieure du couvercle -2- et à sa partie postérieure se trouve pratiquée la bouche de sortie d'eau -ll-ladite bouche forme un demi-cercle sur le couvercle -2- qui prolonge vers l'extérieur ses bords -50- solidairement à la partie antérieure du couvercle -2- se prolonge le support -9- ayant à son extrémité la coupe -l0- pour loger la platine -32- au moyen des orifices -34- traversés par la cheville -l0- l'extrémité de la platine -32- sa forme est de came -33- pour pousser le cylindre -13- pour faciliter la sortie d'eau en poussant le cylindre -l3- au cylindre -29- et celui-ci aux autres cylindres -20- et -l7- à la partie supérieure du couvercle -2- se trouve la cannelure -37- qui loge dans son intérieur le caoutchouc -36- le couvercle -2- restant uni au corps -l- au moyen de vis -5- qui pénétrant par les orifices des languettes -4- se filètent dans les saillants -3-du corps

-l-.

La (fig. 2) représente sur son dessin un récipient -38- ouvert à sa partie supérieure, deux languettes -48- se lèvent, à leur diamètre elles possèdent des orifices de passage -49- dans lesquels se loge la tige -40- au centre de la tige -40- traverse la platine -32- par son orifice -44- à chaque bout de la tige -40- se logent chacun des tubes centreurs -41- de la platine -32-, la tige -40- à ses extrémités a des orifices -42- dans lesquels sont logées les chevilles -43- pour fixation de la tige -40- au récipient -38- dans le dernier tronçon de la platine -32-se trouve solidaire un tuyau court -45- fixé par soudure -46- à la platine -32- à l'intérieur du tube -45- est logée la bouche -47- de la sonde -31-.

Le récipient -38- à sa partie inférieure a les parois -39- qui se prolongent, le fond -51- débordant, lequel en se submergeant dans l'eau accumule une chambre à air -52-.

Revenant sur la fig. l, quand l'appareil hydraulique est placé dans le réservoir -53- au moyen de l'écrou -54- connecté au réseau par la connexion qui se pratique à son entrée filetée -6- l'eau pénètre par les orifices des cylindres -23- et -24- et est retenue par l'action des cylindres -29-, -20- et -l7- ceux-ci reposant sur leurs bases de caoutchouc -25-, -26- et -36- quand l'eau descend dans le réservoir -53-le récipient -38- descend de par son propre poids qui fait basculer la platine -32- sur son axe -l0- et au moyen de sa came -33- pousse le cylindre -l3- lequel pousse le cylindre -29- produisant le premier temps d'ouverture d'eau le cylindre -29- monte jusqu'à la cheville -2l-obligeant à monter le cylindre -20- le second temps d'ouverture se produisant à ce moment-là, le cylindre -20- continuant le mouvement ascendant atteint la cheville -l8- du cylindre -l7- lequel est obligé à monter sur les parois intérieures du corps -l- par le parcours -l6- le troisième temps et dernier d'ouverture totale d'eau se produisant, l'eau qui a commencé à descendre vers le couvercle -2- et à sortir par la bouche -ll- au réservoir et par l'orifice -35- du couvercle -2- l'eau circule à travers l'orifice -35- et est conduite par la sonde -31-jusqu'au récipient -38- remplissant et renouvelant l'eau de celui-ci. Quand dans le réservoir -53- monte le niveau d'eau jusqu'à atteindre le récipient -38- commence à s'élever le récipient -38- en raison de son poids de densité légérement inférieure à l'eau et de l'air -52- accumulé dans le fond -39- la platine commence un mouvement inverse qui permet la descente aux cylindres -29-, -20- et -l7- lesquels descendront jusqu'à être placés, le premier cylindre -l7- fermant la dernière section d'eau ouverte, ensuite le fera le cylindre -20- fermant la deuxième section ouverte et en dernier le fera le cylindre -29- et à ce moment-là seront parfaitement fermés tous les cylindres par leur propre poids et par l'action de la propre pression de l'eau et avec eux tout le débit d'eau.

Le brevet, dans l'essentiel, peut être mené à la pratique sous d'autres formes de réalisation augmentant ou diminuant le nombre de cylindres et différant seulement quant aux détails de celle indiquée uniquement à titre d'exemple, lesquelles pourront également jouir de la protection qu'on demande. Donc, ces perfectionnements pourront être réalisés avec les moyens et matériaux les plus adéquats, car tout cela est compris dans l'esprit des revendications suivantes.

## Revendications

1. Perfectionnements dans une soppape à haute pression d'ouverture et fermeture par temps automatiques sans flotteur pour le remplissage de réservoirs et qui comprend un corps et couvercle, le corps dans son intérieur de forme cylindrique à sa partie supérieure, loge un ensemble de plusieurs cylindres les uns dans les autres communiqués entre eux au moyen de fenêtres, et, chaque cylindre se place dans celui où il est logé au moyen d'un caoutchouc plat placé à pression dans une cannelure pratiquée dans le fond du cylindre qui le loge, cet ensemble de cylindres permet d'ouvrir et de fermer le passage de l'eau par temps, le mouvement des cylindres s'effectue au moyen d'un récipient placé à l'extrémité d'une platine qui se prolonge du corps et on obtient son plein d'eau, au moyen de la connexion au corps par sonde flexible quand le passage de l'eau est ouvert, le poids dudit récipient plein d'eau, agit sur l'autre extrémité de la platine comme un levier pour élever les cylindres, quand le niveau d'eau descend dans le réservoir atteignant le récipient, celui-ci par sa densité inférieure et la chambre à air qu'il accumule dans son fond, commence à monter d'un mouvement ascendant faisant que la platine réalise un mouvement de libération des cylindres, lesquels descendent de par leur propre poids et la pression de l'eau existant à l'intérieur du corps. C'est applicable à des citernes de waters et réservoirs en général pour le remplissage automatique de ceux-ci au moyen de leur niveau.

2. Perfectionnements selon la revendication I, caractérisés parce que l'ouverture et la fermeture du débit se produit en autant nombre de temps que de cylindres se logent dans son intérieur, permettant de diviser la section du débit d'entrée par le même nombre de cylindres qu'il possède, afin de faciliter l'ouverture dans une partie de la section totale du débit, la fermeture s'effectuant de la même façon, c'est-à-dire par des parties de la section la dernière coïncidant avec la section la plus petite du débit afin d'éviter les coups de bélier quand la pression est haute.

3. Perfectionnements suivant revendications antérieures, caractérisés parce qu'on loge la fermeture à l'intérieur du corps dans le sens où circule la pression de l'eau au moyen d'un ensemble de cylindres se logeant dans la forme cylindrique supérieure du corps, lesdits cylindres communiquent entre eux au moyen de fenêtres pratiquées dans leurs parties inférieures, se logeant l'un dans l'autre de diamètre plus petit que le suivant immédiat et ainsi successivement jusqu'au dernier de diamètre plus grand, logé dans le cylindre que possède le corps, caractérisé parce que les parties extérieures inférieures des cylindres réalisent la mission de têtes de soupape au moyen de leurs plans inclinés dans la coupe de la section, ces têtes se placent sur un caoutchouc plat qui mis à pression se trouve dans le fond intérieur du cylindre où loge l'antérieur, la mise en place dudit caoutchouc est caractérisée essentiellement parce qu'on le fait dans une cannelure pratiquée dans le fond du cylindre, la partie supérieure du caoutchouc étant vue seulement et débordant de quelques dixièmes la surface des parois de la cannelure dans lequel il est logé, quand la tête de l'emplacement du cylindre se pose sur le caoutchouc, la pression reignant à l'intérieur du corps qui pousse le cylindre sur le caoutchouc, le caoutchouc cède dans sa flexion vers l'intérieur de la cannelure jusqu'à ce que les plans inclinés du cylindre se calent sur les bords de la surface des parois des cannelures.

4. Perfectionnements selon les revendications antérieures caractérisés parce que, du corps de l'ensemble de soupapes dans l'union avec le couvercle dans la cavité intérieure dudit couvercle, l'eau est reçue à travers l'ensemble de soupapes quand celles-ci sont en position d'ouverture, la bouche de sortie d'eau pratiquée dans le couvercle du corps, a une section d'évacuation ajustée au débit que fournissent tous les cylindres du corps, de façon qu'une légère pression est provoquée dans le passage de l'eau à travers l'intérieur du couvercle qui, avec ladite pression rend possible que l'eau circule par un conduit pratiqué dans un côté du couvercle et qu'au moyen d'une sonde connectée au conduit susdit, l'eau est transportée par ladite sonde jusqu'à un récipient de dimension inférieure, rendant possible son plein et renouvellement de l'eau dans le récipient.

5. Perfectionnements selon les revendications antérieures caractérisés parce que le mécanisme menant à l'ouverture et la fermeture des cylindres à l'intérieur du corps qui loge l'ensemble des soupapes, consiste à disposer d'un récipient se situant à l'extrémité de la platine, opposé à celui de la fixation qui maintient l'autre bout de la platine au corps de la soupape, ledit récipient à l'intérieur emmagasine une petite quantité d'eau, et, au fond, la prolongation de ses parois débordant la position de la base inférieure du cuveau, a pour finalité l'accumulation d'air quand le récipient est submergé dans la masse d'eau du réservoir, de façon que quand le récipient est plein d'eau en raison de l'approvisionnement que lui a fourni la sonde, et, une fois que l'eau dans le réservoir est descendue, le récipient suspendu de la platine avec tout le poids que lui donne son contenu d'eau, exerce une force de gravité sur la platine qui poussée à l'autre extrémité de la platine se multiplie par la longueur de son rayon, étant capable de vaincre la résistance de la pression que reçoit le premier cylindre d'ouverture et ensuite le cylindre suivant jusqu'à l'ouverture de tous les cylindres, à cet instant tout le débit est évacué dans le réservoir, le plein du réservoir commençant où son niveau atteint les parois du fond du récipient, à mesure que le niveau d'eau dans le réservoir, monte par les parois du récipient, en premier lieu sera restée une masse d'air accumulée à la partie extérieure du fond du récipient emmagasinée entre le fond du récipient à sa partie extérieure et les parois de celui-ci, le niveau ascendant continue dans le réservoir et à son tour atteint la partie supérieure du récipient, à ce moment-là le récipient commence un mouvement aussi ascendant avec le niveau d'eau du réservoir, poussé d'une part par la perte de poids qu'il subit le récipient étant submergé et d'autre part par la masse d'air accumulé dans son fond, obligeant la platine à réaliser un mouvement ascendant et par conséquent inverse à celui que dans le temps d'ouverture de cylindres il avait réalisé, avec ledit mouvement ascendant la platine commence à libérer les cylindres et ceux-ci à descendre jusqu'à se poser sur leurs bases et fermer le passage totalement dans le débit.

6. Perfectionnements selon les revendications antérieures, caractérisés parce que sur la surface extérieure de couvercle du corps se dresse le support sous forme de fourche pour fixer la platine, la platine agit au moyen d'une espèce de came à son extrémité, sur le cylindre pousseur qui traverse le couvercle du corps au moyen d'un orifice circulaire que l'extérieur du couvercle a en son centre, la sortie d'eau s'effectue du corps à travers l'ensemble de cylindres vers le couvercle du corps, l'eau passe au réservoir à travers une bouche pratiquée dans le fond extérieur du couvercle en sens circulaire entre la paroi intérieure et postérieure du couvercle et l'orifice central où se loge le cylindre de poussée, ladite bouche occupe une longueur proche à 180º de la surface du couvercle du corps, les bords de la bouche se prolongeant vers l'extérieur afin de canaliser le tuyau d'eau, se caractérisant parce que la platine est située à la partie antérieure du couvercle, se prolongeant jusqu'au cylindre de poussée, raison pour laquelle il n'y a pas de contact avec le tuyau de sortie d'eau et elle est donc préservée de l'érosion que l'eau pourrait lui causer.

7. PERFECTIONNEMENTS DANS UNE SOUPAPE HYDRAULIQUE A HAUTE PRESSION D'OUVERTURE ET FERMETURE PAR TEMPS AUTOMATIQUES SANS FLOTTEUR POUR LE REMPLISSAGE DE RESERVOIRS.

Fig. 1

Fig. 2

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-927733 (KRAVAGNA) <br> * page 2, ligne 95 - page 3, ligne 35; figures 1-8 * <br> --- | 1-7 | F16K47/02 <br> F16K21/18 <br> F16K31/26 |
| A | GB-A-242174 (DAMGAARD) <br> * le document en entier * <br> --- | 1, 4, 5 | |
| A | GB-A-6473AD1913 (WALLACE) <br> * le document en entier * <br> --- | 1, 5 | |
| A | US-A-4269227 (TATSUO) <br> --- | | |
| A | FR-A-2044463 (HAAS) <br> ----- | | |

|  | DOMAINES TECHNIQUES RECHERCHES (Int. Cl.5) |
|---|---|
|  | F16K <br> E03C <br> E03D |

Le présent rapport a été établi pour toutes les revendications

| Lieu de la recherche | Date d'achèvement de la recherche | Examinateur |
|---|---|---|
| LA HAYE | 02 OCTOBRE 1990 | FONSECA Y FERNANDEZ |